# EUROPÄISCHE PATENTSCHRIFT

(11) **EP 0 641 138 B1**
(45) Veröffentlichungstag und Bekanntmachung des Hinweises auf die Patenterteilung: **07.11.2001**
(21) Anmeldenummer: 94112469.5
(22) Anmeldetag: 10.08.1994
(51) Int. Cl.: H04Q 9/14, B60R 16/02

(54) **Vorrichtung zur Übertragung von Messwerten mehrerer Messstellen über eine Funkverbindung**
Apparatus for transmission of measured values from a plurality of measuring stations via a radio-frequency link
Dispositif pour la transmission de valeurs mesurées dans plusieurs points de mesure par une liaison à fréquence-radio

(30) Priorität: 24.08.1993 DE 4328393
(43) Veröffentlichungstag der Anmeldung: 01.03.1995
(73) Patentinhaber: ROBERT BOSCH GMBH, 70442 Stuttgart (DE)
(72) Erfinder: Anlauf, Jürgen, Dipl.-Ing., D-73035 Göppingen (DE); Roth, Rolf, Dipl.-Ing. (BA), D-73119 Zell u.A. (DE); Haaga, Gerhard, Dipl.-Ing., D-73265 Ditzingen (DE)

(56) Entgegenhaltungen:
- EP-A- 0 091 144
- EP-A- 0 113 478
- EP-A- 0 422 507
- DE-A- 2 244 176
- DE-A- 3 538 687
- DE-A- 3 842 484
- DE-A- 4 131 341
- NATIONAL TELECOMMUNICATIONS CONFERENCE, Bd.4, Nr.4, 4. Dezember 1980, HOUSTON, TEXAS, US Seiten 72.3.1 - 72.3.5 L.C. CHIEN 'SHORT-RANGE RADIO TRANSMISSION OF SENSOR DATA'
- PATENT ABSTRACTS OF JAPAN vol. 15, no. 330 (E-1103) 22. August 1991 & JP-A-03 124 141 (NISSAN MOTOR CO LTD) 27. Mai 1991
- ELECTRO/81 CONFERENCE RECORD, Bd.6, 9. April 1981, NEW YORK, NY, USA Seiten 1 - 6 STUCKI ET AL. 'SENSOR & DATA ACQUISTION REQUIREMENTS FOR AUTOMOTIVE CONTROL SYSTEMS'
- DATABASE WPI Week 9129, Derwent Publications Ltd., London, GB; AN 91-208961 & DD-A-287 231 (TECH HOCH ZWICKA) 21. Februar 1991

## Beschreibung

### STAND DER TECHNIK

Die Erfindung betrifft eine Vorrichtung zur Übertragung von Meßwerten mehrerer Meßstellen über eine Funkverbindung zu einem zentralen Sendeempfänger nach der Gattung des Hauptanspruchs.

Derartige, beispielsweise aus der DE-OS 35 38 687 oder der DE-OS 41 31 341 bekannte Vorrichtungen werden zweckmäßigerweise überall 1 dort eingesetzt, wo Meßwerte von einem bewegten Objekt, beispielsweise einem Fahrzeug, zu einer Auswertestation, beispielsweise einem Diagnosegerät, übertragen werden sollen. Eine bevorzugte Anwendung erfolgt bei der Kraftfahrzeug-Diagnose, bei der die unterschiedlichsten Meßwerte zur Echtzeit-Meßwertübertragung über eine Hochfrequenz-Funktverbindung übertragen werden. Beispielsweise müssen bei einem Bremsdruck-Meßsystem verschiedene Drücke an verschiedenen Stellen des Bremssystems erfaßt und zur Auswertung übertragen werden. Dabei wird vorzugsweise noch zusätzlich ein Referenzdruck übertragen.

Gemäß der DE-OS 35 38 687 werden die von mehreren Sensoren abggegebenen Meßwerte zeitlich nacheinander einem Sender zugeführt, der die Meßwerte als codierte Information auf einem vorgegebenen HF-Kanal zu einer stationären Diagnosestation abstrahlt. Die Trennung und Zuordnung der nacheinander übertragenen Informationen kann hier problematisch sein und einen nicht geringen Aufwand bedeuten. In einer anderen Ausgestaltung kann auch jedem Sensor ein Sender zugeordnet sein, wobei das stationäre Diagnosegerät dann eine der Anzahl der Sender entsprechende Anzahl von unterschiedlichen Empfängern aufweist, die jeweils auf unterschiedlichen HF-Kanälen mit den zugeordneten Sendern abgestimmt sind. Auch dies bedeutet einen nicht unerheblichen Aufwand bei der Meßwerterfassung, insbesondere wenn eine große Anzahl von Meßstellen vorgesehen ist.

Die aus der DE-OS 41 31 341 bekannte Vorrichtung besitzt sender- und empfängerseitig Umschalteinrichtungen zur Umschaltung zwischen den verschiedenen Meßstellen bzw. den verschiedenen Auswertekanälen. Die Steuerung dieser Umschalteinrichtungen muß synchron erfolgen, was ebenfalls einen großen Schaltungsaufwand erfordert. Die Synchronisierung erfolgt mit einem Normalzeitsender, wobei jede Sende-Empfangseinrichtung einen derartigen Empfänger enthalten muß.

Aus dem Tagungsbericht der NATIONAL TELECOMMUNICATIONS CONFERENCE, Bd.4, Nr.4, 4. Dezember 1980, HOUSTON, TEXAS, US, Seiten 72.3.1 - 72.3.5 L.C.,
CHIEN: 'SHORT-RANGE RADIO TRANSMISSION OF SENSOR DATA'
ist eine Übertragungseinrichtung für Sensordaten bekannt geworden, bei der die einzelnen Meßstellen-Sende/Empfänger von einem zentralen Sende/Empfänger über eine Funkverbindung einzeln angesprochen und zum Abgeben des erfaßten Signals veranlaßt werden.

Aus der DE-OS 22 44 176 ist eine gattungsgemäße Einrichtung zur Meßwertübertraugung bekannt geworden, bei der ebenfalls die einzelnen Meßstellen-Sende/Empfänger von einem zentralen Sende/Empfänger einzeln angesprochen werden. Ständig in Betrieb gehalten werden in den einzelnen Meßstellen-Sende/Empfänger lediglich die Empfangs- sowie die Decodereinheiten. Wird in einem Meßstellen-Sende/Empfänger eine für den betreffenden Meßstellen-Sende/Empfänger bestimmtes Codesignal erkannt, dann wird die Meßwerterfassung durch Inbetriebnahme des Sensorteils gestartet und anschließend der erfaßte Meßwert zum zentralen Sende/Empfänger übertragen. Mit dieser Maßnahme wird eine hohe Standzeit bei einem batteriebetriebenen System erreicht. Weiterhin ist es prinzipiell möglich, daß sämtliche Meßstellen-Sende/Empfänger auf den gleichen HF-Kanal abgestimmt werden können.

Aus der EP-A 422 507 ist eine leitungsgebundene Diagnosevorrichtung bekannt geworden, die ein Diagnosegerät enthält, das an Busleitungen anschließbar ist, an denen die zu diagnostizierenden Steuergeräte angeschlossen sind. Nach dem Anschließen des Diagnosegeräts erfolgt eine Initialisierung sowie eine Festlegung der aus dem Steuergerät auszulesenden Meßdaten. Danach wird das zu diagnostizierende Steuergerät mit einem Startsignal aufgefordert, die Meßdaten sequentiell zu übertragen. Das Steuergerät stellt die Meßdaten bis zum Ablauf einer vom Steuergerät vorgegebenen Zeit zur Verfügung. Die vorgegebene Übertragungszeit kann vom Diagnosegerät auf eine unbestimmte Dauer verlängert werden. Zusätzlich ist die Möglichkeit vorgesehen, dass das Diagnosegerät die Datenübertragung durch Abgabe eines entsprechenden Signals an das zu diagnostizierende Steuergerät von sich aus beendet.

### Vorteile der Erfindung

Die erfindungsgemäße Vorrichtung mit den kennzeichnenden Merkmalen des Anspruchs 1 hat demgegenüber den Vorteil, dass auf einfache Weise die Meßdaten einer Vielzahl von Meßstellen über einen einzigen Funkkanal übertragen werden können, wobei die verschiedenen Meßstellen-Sendeempfänger nacheinander individuell vom zentralen Sendeempfänger über den jeweiligen Code angesprochen werden, so dass die Zuordnung der empfangenen Meßsignale keine Synchronisation erfordert. Der zentrale Sendeempfänger enthält hierzu eine den wenigstens einen Meßwert jeder Meßwertübertragung über die zuvor gesendeten Codesignale den entsprechenden Meßstellen-Sendeempfänger zuordnenden Steuer- und Auswerteeinrichtung, die weiterhin eine Einrichtung zur Festlegung eines Zeitfensters aufweist. Die Steuer- und Auswerteeinrichtung enthält Mittel zur Überprüfung des Empfangs von Meßwerten innerhalb des Zeitfensters nach Absenden des Codesignals. Beim Ausbleiben von Meßwerten innerhalb des Zeitfensters erfolgt entweder eine Fehlermeldung oder dasselbe Codesignal wird nochmals wenigstens einmal übertragen.

Eine Veränderung der Zahl der Meßstellen, insbesondere eine Erweiterung, ist relativ einfach möglich, da dann lediglich der zentrale Sendeempfänger zusätzliche Codesignale abzustrahlen braucht, die den nachträglich angebrachten Meßstellen zugeordnet sind. Auch eine Verringerung der Zahl der Meßstellen ist in einfacher Weise möglich, das selbst ohne Veränderung des zentralen Sendeempfängers dann lediglich beim Ansprechen einer nicht vorhandenen Meßstelle, gegebenenfalls nach einer Wiederholung der Aussendung des Codesignals, lediglich ein Fehlersignal für diese Meßstelle erzeugt wird.

Vorteilhafte Weiterbildungen und Ausgestaltungen ergeben sich aus abhängigen Ansprüchen.

Jeder Meßstellen-Sendeempfänger ist zweckmäßigerweise mit einer automatisch nach der Übertragung einer vorgegebenen Anzahl von Meßwerten seinen Sender abschaltenden Abschaltvorrichtung versehen. Auf diese Weise wird verhindert, dass Überschneidungen mit Signalen anderer Meßstellen-Sendeempfänger auftreten.

Eine vorteilhafte Ausgestaltung sieht vor, dass die Steuer- und Auswerteeinrichtung mit Mitteln zur Steuerung der Absendung von Codesignalen für den jeweils nächsten Meßstellen-Sendeempfänger nicht vor Ablauf des Zeitfensters versehen ist. Mit dieser Maßnahme wird sichergestellt, dass Überschneidungen von Meßwertübertragungen, die gegebenenfalls nicht mehr getrennt werden könnten, vermieden werden.

Eine andere vorteilhafte Ausgestaltung sieht vor, dass die Steuer- und Auswerteeinrichtung mit einer eine Sendestufe des zentralen Sendeempfängers nur während der Absendung von Codesignalen aktivierenden Schalteinrichtung in Wirkverbindung steht. Mit dieser Maßnahme wird erreicht, dass die Sendeendstufe lediglich dann in Betrieb ist, wenn der zentrale Sendeempfänger selbst eine Information übertragen will.

Die Meßstellen-Sendeempfänger und der zentrale Sendeempfänger weisen eine einheitliche Funkfrequenz auf, die veränderbar ist. Hierdurch benötigt der zentrale Sendeempfänger nur einen einzigen Empfänger für die Meßsignale aller Meßstellen. Durch Veränderung dieser Funkfrequenz kann beispielsweise beim Auftreten von Störungen zu einem störungsfreieren Frequenzbereich übergewechselt werden.

Zur Veränderung der Funkfrequenz sind zweckmäßigerweise Einstellelemente, wie Schalter, vorgesehen. Noch vorteilhafter kann jedoch die Funkfrequenz der Meßstellen-Sendeempfänger vom zentralen Sendeempfänger aus durch ausgesandte Codesignale verändert werden. Hierdurch erübrigen sich manuelle Eingriffe.

Für viele Anwendungen wird ein Referenz-Meßsignal benötigt, beispielsweise bei einem Bremsdruck-Meßsystem der Druck an einem Bremsdruck-Kupplungskopf. Damit dieses Referenz-Meßsignal ständig aktualisiert zur Verfügung steht, sind in vorteilhafter Weise ein auf einer anderen Funkfrequenz arbeitender Meßstellen-Sender zur Übertragung dieses Referenz-Meßsignals sowie ein auf dieser anderen Funkfrequenz arbeitender zusätzlicher Empfänger im zentralen Sendeempfänger vorgesehen. Dadurch kann die Übertragung der Referenz-Meßsignale gleichzeitig mit der Übertragung der Meßsignale der Meßstellen erfolgen.

### ZEICHNUNG

Ein Ausführungsbeispiel der Erfindung ist in der Zeichnung dargestellt und in der nachfolgenden Beschreibung näher erläutert. Es zeigen:
- Fig. 1: ein schematisches Blockschaltbild einer solchen Vorrichtung zur Übertragung von Meßwerten mehrerer Meßstellen über eine Funkverbindung zu einem zentralen Sendeempfänger als Ausführungsbeispiel der Erfindung und
- Fig. 2: ein Flußdiagramm zur Erläuterung der Wirkungsweise der Steuer-und Auswerteeinrichtung gemäß Fig. 1.

### BESCHREIBUNG DES AUSFÜHRUNGSBEISPIELS

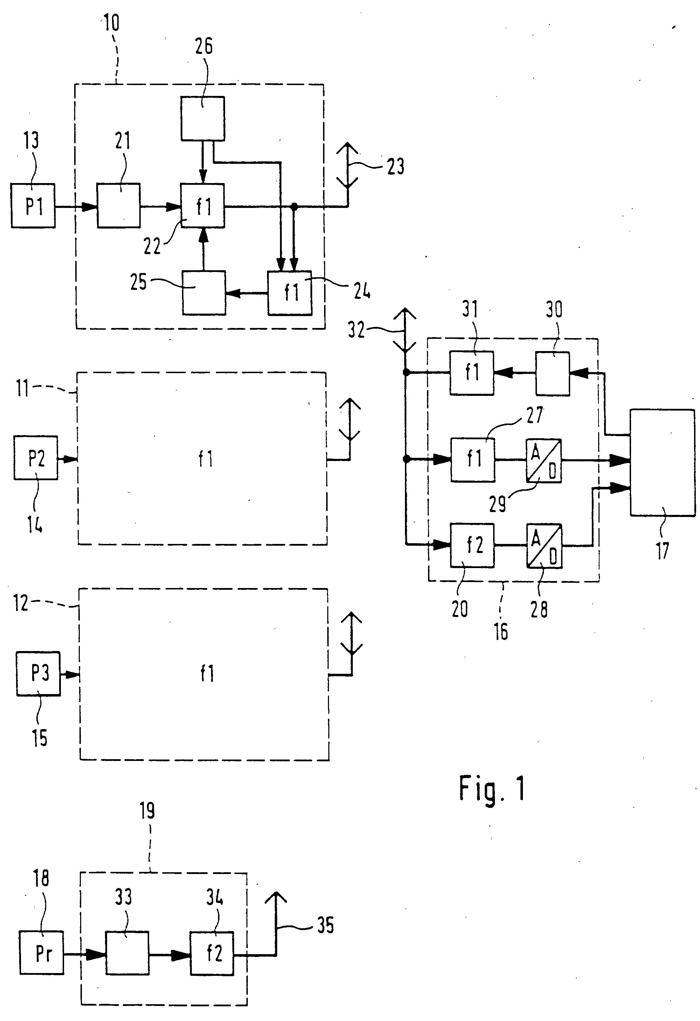

Bei dem in Fig. 1 dargestellten Ausführungsbeispiel sind drei Meßstellen dargestellt, die jeweils aus einem Meßstellen-Sendeempfänger 10-12 bestehen, denen die Meßsignale P1 bis P3 von Druckmeßsensoren 13-15 zugeführt sind. Die mit diesen Druckmeßsensoren 13-15 verbundenen Meßstellen-Sendeempfänger 10-12 sind an verschiedenen Stellen eines Bremsdruck-Meßsystems eines Lastkraftwagens angebracht, an denen die Bremsdrücke gemessen, überwacht oder geprüft werden sollen.

Ein zentraler Sendeempfänger 16 ist beispielsweise Bestandteil eines im übrigen nicht dargestellten Diagnosegeräts zur Kraftfahrzeug-Diagnose. An diesen zentralen Sendeempfänger 16 ist als Steuer- und Auswerteeinrichtung ein Computer 17 angeschlossen. Anstelle eines Computers kann selbstverständlich auch eine andere Ablaufsteuerung treten, die die entsprechenden, später noch näher erläuterten Funktionen beinhaltet. Dieser zentrale Sendeempfänger 16 kommuniziert mit den Meßstellen-Sendeempfängern 10-12 über eine gemeinsame Hochfrequenz-Funkverbindung mit der Frequenz f1.

Zur Erfassung von Referenzdruckwerten Pr, die beispielsweise an einem Bremsdruck-Kupplungskopf des Lastkraftwagens mittels eines Druckmeßsensors 18 erfaßt werden, dient ein mit diesem Druckmeßsensor 18 verbundener Sender 19, der mit einer von f1 abweichenden Frequenz f2 arbeitet. Der zentrale Sendeempfänger 16 weist hierfür eine entsprechende Empfangsstufe 20 auf.

Jeder der Meßstellen-Sendeempfänger 10-12 ist gleich aufgebaut, wobei zur Vereinfachung lediglich der Meßstellen-Sendeempfänger 10 detaillierter dargestellt ist. Dort ist der Druckmeßsensor 13 über einen Modulator 21 mit einer Sendestufe 22 verbunden, die ihr hochfrequentes Sendesignal über eine Antenne 23 abstrahlt. Das hochfrequente Signal wird dabei mittels des Modulators 21 entsprechend des erfaßten Meßwerts P1 moduliert. Weiterhin ist die Antenne 23 mit einer Empfangsstufe 24 verbunden, deren Ausgangssignal über eine Decodierstufe 25 die Sendestufe 22 ein- und ausschalten kann.

Zur Einstellung bzw. Veränderung der Arbeitsfrequenz f1 dient eine Einstellvorrichtung 26, die beispielsweise aus einer Anordnung von Schiebeschaltern oder Tasten bestehen kann.

Der zentrale Sendeempfänger 16 besitzt neben der Empfangsstufe 20 für die Frequenz f2 noch eine weitere Empfangsstufe 27 für die Frequenz f1. Die Ausgänge beider Empfangsstufen 20, 27 sind jeweils über einen Analog/Digital-Wandler 28, 29 mit Eingängen des Computers 17 verbunden. Ein Steuerausgang dieses Computers 17 steuert über einen Codegenerator 30 eine Sendestufe 31 für die Frequenz f1. Eine Antenne 32 ist mit dieser Sendestufe 31 sowie mit den beiden Empfangsstufen 20, 27 verbunden.

Im Sender 19 ist ähnlich wie bei den Meßstellen-Sendeempfängern 10-12 der Druckmeßsensor 18 über einen Modulator 33 mit einer Sendestufe 34 verbunden, die ihre hochfrequenten Sendesignale mit der Frequenz f2 über eine Antenne 35 abgibt.

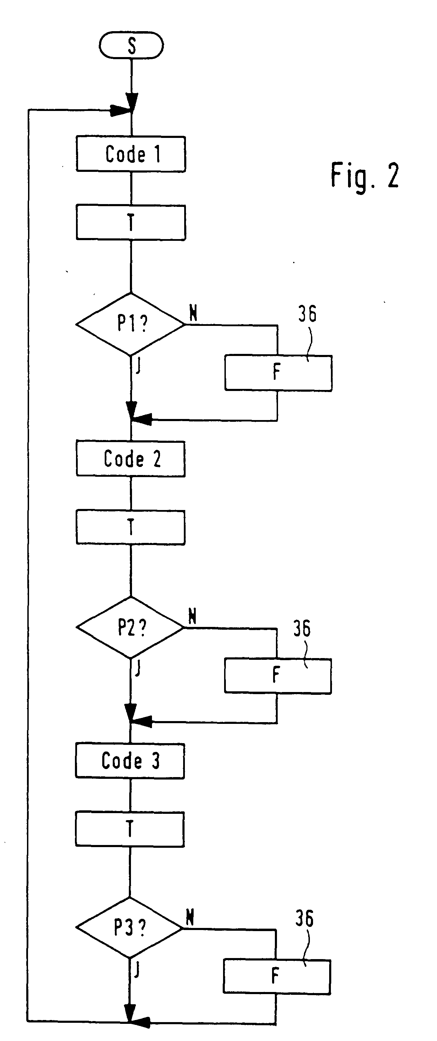

Die Wirkungsweise der in Fig. 1 dargesellten Vorrichtung wird im folgenden anhand des in Fig. 2 dargestellten Flußdiagramms erläutert. Das Prinzip besteht darin, daß die Druckwerte P1 bis P3 zyklisch abgefragt werden und jeweils im Computer 17 zur Auswertung mit dem Referenzsignal Pr verglichen werden können.

Zunächst erzeugt der Computer 17 ein Steuersignal für den Codegenerator 30, der diesen veranlaßt, die Sendestufe 31 zu aktivieren, worauf diese ein durch Codesignale (Code 1) moduliertes Funksignal über die Antenne 32 abgibt. Dieses Funksignal empfangen alle Empfangsstufen 24 aller Meßstellen-Sendeempfänger 10-12, jedoch spricht nur eine der Decodierstufen 25 auf diesen Code 1 an, im Ausführungsbeispiel sei dies zunächst die Decodierstufe 25 des Meßstellen-Sendeempfängers 10. Diese Decodierstufe 25 aktiviert dadurch für eine vorbestimmte Zeit dies Sendestufe 22, wodurch mit dem Meßwert P1 modulierte Funksignale über die Antenne 23 abgegeben werden. Diese Funksignale werden von der Empfangsstufe 27 empfangen, wobei die demodulierten Meßsignale in digitaler Form dem Computer 17 zugeführt werden.

Nach einer Zeit T, die für das Senden der Codesignale und den Empfang der Meßsignale zur Verfügung steht, überprüft der Computer 17, ob ein Meßwert eingegangen ist, bei dem es sich nur um den Meßwert P1 handeln kann. Ist dies der Fall, so wird erneut der Codegenerator 30 angesteuert, um diesen zu veranlassen, einen Code 2 enthaltende Codesignale über die Sendestufe 31 abzusenden, die in entsprechender Weise den Meßstellen-Sendeempfänger 11 aktivieren sollen, da dessen Decodierstufe 25 auf diesen Code 2 abgestimmt ist. Dasselbe wiederholt sich beim Meßstellen-Sendeempfänger 12 und kann sich bei einer praktisch beliebigen Zahl weiterer Meßstellen-Sendeempfänger weiter wiederholen.

Wird im Computer 17 festgestellt, daß innerhalb der Wartezeit T kein Meßsignal eingegangen ist, so wird eine Fehlermeldung 36 abgegeben. Diese Fehlermeldungen können beispielsweise Anzeigeelemente aktivieren, die den jeweiligen Meßstellen-Sendeempfängern 10-12 zugeordnet sind, damit festgestellt werden kann, wo der Fehler liegt. Diese Aktivierung einer Anzeigevorrichtung kann beispielsweise für eine bestimmte Zeit erfolgen, so daß nach Auftreten eines einmaligen Fehlers die Anzeigevorrichtung wieder abgeschaltet wird bzw. erlischt.

Alternativ zum dargestellten Ablauf kann nach Ausbleiben eines Meßsignals nach der Wartezeit T auch der entsprechende Code ein zweites oder auch drittes Mal abgesandt werden, wobei jeweils danach erneut geprüft wird, ob der erwünschte Meßwert als Antwortsignal eingegangen ist. Erst nach einer vorgebbaren Zahl von Ansprechversuchen wird dann eine Fehlermeldung abgegeben, und das Programm wird fortgesetzt.

Mit der Einstellvorrichtung 26 kann jeweils die Frequenz f1 in den verschiedenen Meßstellen-Sendeempfängern 10-12 verändert-werden, beispielsweise durch Kanalumschaltung, wenn auf dem aktuellen Frequenzbereich Störungen auftreten. Eine Umschaltung kann auch aus anderen Gründen erforderlich sein. Die Umschaltung der Frequenz f1 (und auch der Frequenz f2) im zentralen Sendeempfänger 16 kann in nicht dargestellter Weise entsprechend erfolgen, ebenso im Sender 19.

Alternativ hierzu kann die Frequenz f1 auch vom Computer 17 gesteuert erfolgen. Hierzu werden entsprechende Steuersignale dem Codegenerator 30 zugeführt, der zum einen die Arbeitsfrequenz der Sendestufe 31 verändert und zum anderen diesen zuvor veranlaßt, Codesignale an die einzelnen Meßstellen-Sendeempfänger 10-12 abzusenden, die dort über die jeweiligen Decodierstufen 25 die Veränderung der Arbeitsfrequenz bewirken. Bei einer solchen Anordnung können die Einstellvorrichtungen 26 entfallen.

Beim dargestellten Ausführungsbeispiel arbeitet der Sender 19 bzw. die Sendestufe 34 kontinuierlich und sendet kontinuierlich Referenz-Meßsignale Pr über die Empfangsstufe 20 an den Computer 17. Es ist selbstverständlich auch möglich, den Sender 19 als Sendeempfänger entsprechend den Meßstellen-Sendeempfängern 10-12 auszubilden und den Referenz-Meßwert nur bei Bedarf anzufordern, z. B. jeweils zwischen zwei anderen Meßwerten. Wird kein Referenz-Meßwert benötigt, so kann der Sender 19 oder ein entsprechender Sendeempfänger auch ganz entfallen.

Die dargestellte Anordnung ist selbstverständlich nicht auf die Erfassung von Druckmeßwerten beschränkt, vielmehr können praktisch beliebige Meßwerte von Meßstellen-Sendeempfängern aus zum zentralen Sendeempfänger übertragen werden.

## Patentansprüche

1. Vorrichtung zur Übertragung von Meßwerten mehrerer Meßstellen über eine Funkverbindung zu einem zentralen Sendeempfänger (16), wobei die Meßwerte zeitlich nacheinander übertragen werden, wobei jeder Meßstelle ein Meßstellen-Sendeempfänger (10-12) zugeordnet ist, wobei der zentrale Sendeempfänger (16) eine nacheinander den einzelnen Meßstellen-Sendeempfänger (10-12) zugeordnete Codesignale aussendende Code-Sendeeinrichtung (30, 31) und eine den wenigstens einen Meßwert jeder Meßwertübertragung über die zuvor gesendeten Codesignale dem entsprechenden Meßstellen-Sendeempfänger (10-12) zuordnenden Steuer- und Auswerteeinrichtung (17) enthält, die eine Einrichtung zur Festlegung eines Zeitfensters (T) aufweist, und wobei die Meßstellen-Sendeempfänger (10-12) mit einer nur beim Empfang zugeordneter Codesignale eine Meßwertübertragung auslösenden Dekodiereinrichtung versehen sind, **dadurch gekennzeichnet, daß** die Steuer- und Auswerteeinrichtung (17) mit Mitteln zur Überprüfung des Empfangs von Meßwerten innerhalb des Zeitfensters (T) nach Absenden eines Codesignals versehen ist, wobei beim Ausbleiben von Meßwerten innerhalb dieses Zeitfensters (T) eine Fehlermeldung (36) ausgelöst und/oder dasselbe Codesignal nochmals wenigstens einmal übertragen wird.

2. Vorrichtung nach Anspruch 1, **dadurch gekennzeichnet, daß** jeder Meßstellen-Sendeempfänger (10-12) mit einer automatisch nach der Übertragung einer vorgegebenen Anzahl von Meßwerten oder vorgebbaren Sendezeit seinen Sender abschaltenden Abschaltvorrichtung versehen ist.

3. Vorrichtung nach Anspruch 1 oder 2, **dadurch gekennzeichnet, daß** die Steuer- und Auswerteeinrichtung (17) mit Mitteln zur Steuerung der Absendung von Codesignalen für den jeweils nächsten Meßstellen-Sendeempfänger (10-12) nicht vor Ablauf des Zeitfensters (T) versehen ist.

4. Vorrichtung nach Anspruch 3, **dadurch gekennzeichnet, daß** die Steuer- und Auswerteeinrichtung (17) mit einer eine Sendestufe (31) des zentralen Sendeempfängers (16) nur während der Absendung von Codesignalen aktivierenden Schalteinrichtung in Wirkverbindung steht.

5. Vorrichtung nach einem der vorhergehenden Ansprüche, **dadurch gekennzeichnet, daß** die Meßstellen-Sendeempfänger (10-12) und der zentrale Sendeempfänger (16) eine einheitliche Funkfrequenz aufweisen, die insbesondere veränderbar ist.

6. Vorrichtung nach Anspruch 5, **dadurch gekennzeichnet, daß** zur Veränderung der Funkfrequenz Einstellelemente (26), wie Schalter, vorgesehen sind.

7. Vorrichtung nach Anspruch 5, **dadurch gekennzeichnet, daß** zur Veränderung der Funkfrequenz der Meßstellen-Sendeempfänger (10-12) vom zentralen Sendeempfänger (16) ausgesendete Codesignale vorgesehen sind.

8. Vorrichtung nach einem der vorhergehenden Ansprüche, **dadurch gekennzeichnet, daß** ein auf einer anderen Funkfrequenz arbeitender Meßstellen-Sender (19) zur Übertragung von Referenz-Meßsignalen sowie eine auf dieser anderen Funkfrequenz arbeitende zusätzliche Empfangsstufe (20) im zentralen Sendeempfänger (16) vorgesehen sind.

9. Vorrichtung nach Anspruch 8, **dadurch gekennzeichnet, daß** in der Steuer- und Auswerteeinrichtung (17) eine Vergleichseinrichtung zum Vergleich der Meßwerte mit den Referenz-Meßwerten vorgesehen ist.

10. Vorrichtung nach einem der vorhergehenden Ansprüche, **gekennzeichnet durch** die Ausbildung als Meßwertübertragungssystem für die Bremsdruckprüfung an Kraftfahrzeugen, insbesondere Lastkraftwagen.

11. Vorrichtung nach Anspruch 10, **dadurch gekennzeichnet, daß** die Meßstellen-Sendeempfänger (10-12) an Komponenten des Bremssystems und der zentrale Sendeempfänger (16) an einem Bremsenprüfstand angeordnet sind.

12. Vorrichtung nach Anspruch 10 oder 11, **dadurch gekennzeichnet, daß** ein Referenz-Meßsignal der Druckmeßwert an einem Bremsdruck-Kupplungskopf des Kraftfahrzeugs ist.

## Claims

1. Apparatus for transmitting measured values from a plurality of measurement points via a radio link to a central transceiver (16), the measured values being transmitted successively in time, each measurement point having an associated measurement point transceiver (10-12), the central transceiver (16) containing a code transmission device (30, 31) which successively transmits code signals associated with the individual measurement point transceivers (10-12) and a control and evaluation device (17) which allocates the at least one measured value in each measured value transmission to the appropriate measurement point transceiver (10-12) using the previously transmitted code signals and has a device for stipulating a time window (T), and the measurement point transceivers (10-12) being provided with a decoding device which initiates a measured value transmission only when allocated code signals are received, **characterized in that** the control and evaluation device (17) is provided with means for checking the reception of measured values within the time window (T) after a code signal has been despatched, an error message (36) being triggered and/or the same code signal being transmitted again at least once in the absence of measured values within this time window (T).

2. Apparatus according to Claim 1, **characterized in that** each measurement point transceiver (10-12) is provided with a disconnection apparatus which automatically disconnects its transmitter after transmission of a prescribed number of measured values or after a prescribeable transmission time.

3. Apparatus according to Claim 1 or 2,
**characterized in that** the control and evaluation device (17) is provided with means for controlling the despatch of code signals for the respectively next measurement point transceiver (10-12) not before the time window (T) has elapsed.

4. Apparatus according to Claim 3, **characterized in that** the control and evaluation device (17) is operatively connected to a switching device which activates a transmission stage (31) of the central transceiver (16) only during the despatch of code signals.

5. Apparatus according to one of the preceding claims, **characterized in that** the measurement point transceivers (10-12) and the central transceiver (16) have a standard radio frequency which, in particular, is variable.

6. Apparatus according to Claim 5, **characterized in that** setting elements (26), such as switches, are provided for varying the radio frequency.

7. Apparatus according to Claim 5, **characterized in that** code signals transmitted by the central transceiver (16) are provided for varying the radio frequency of the measurement point transceivers (10-12).

8. Apparatus according to one of the preceding claims, **characterized in that** a measurement point transmitter (19), operating at another radio frequency, for transmitting reference measured signals and an additional reception stage (20) operating at this other radio frequency are provided in the central transceiver (16) .

9. Apparatus according to Claim 8, **characterized in that** a comparison device for comparing the measured values with the reference measured values is provided in the control and evaluation device (17).

10. Apparatus according to one of the preceding claims, **characterized by** its being designed as a measured value transmission system for testing the brake pressure on motor vehicles, in particular heavy goods vehicles.

11. Apparatus according to Claim 10, **characterized in that** the measurement point transceivers (10-12) are arranged on components of the braking system and the central transceiver (16) is arranged on a brake test bench.

12. Apparatus according to Claim 10 or 11,
**characterized in that** a reference measured signal is the measured pressure value on a brake pressure coupling head on the motor vehicle.

## Revendications

1. Dispositif pour transmettre des valeurs de mesure de plusieurs points de mesure par une liaison radio vers un émetteur/récepteur central (16), selon lequel
• les valeurs de mesure sont transmises successivement dans le temps,
• chaque point de mesure comporte un émetteur/récepteur de points de mesure (10-12),
• l'émetteur/récepteur central (16) comporte une installation d'émission de code (30, 31) émettant un signal de code associé successivement aux différents émetteurs/récepteurs de points de mesure (10-12) et une installation de commande et d'exploitation associant au moins une valeur de mesure de chaque transmission de valeur de mesure par les signaux de code émis précédemment à l'émetteur/récepteur de points de mesure (10-12) correspondant, l'installation d'exploitation comportant une installation pour fixer une fenêtre de temps (T),
• les émetteurs/récepteurs de points de mesure (10-12) sont munis d'une installation de décodage pour déclencher une transmission de valeur de mesure seulement à la réception d'un signal codé,
**caractérisé en ce que**
l'installation de commande et d'exploitation (17) est munie de moyens pour vérifier la réception de valeurs de mesure à l'intérieur de la fenêtre de temps (T) après l'émission d'un signal de code, et en l'absence de valeur de mesure à l'intérieur de cette fenêtre de temps (T), il déclenche un signal de défaut (36) et/ou il transmet une nouvelle fois au moins le même signal de code.

2. Dispositif selon la revendication 1,
**caractérisé en ce que**
chaque émetteur/récepteur de points de mesure (10-12) comporte un dispositif de coupure qui coupe automatiquement son émetteur après la transmission d'un nombre prédéterminé de valeurs de mesure ou après une durée d'émission prédéterminée.

3. Dispositif selon l'une quelconque des revendications 1 ou 2,
**caractérisé en ce que**
l'installation de commande et d'exploitation (17) comporte des moyens pour commander l'émission de signaux de code pour chaque fois l'émetteur/récepteur du point de mesure suivant (10-12) mais seulement après la fin de la fenêtre de temps (T).

4. Dispositif selon la revendication 3,
**caractérisé en ce que**
l'installation de commande et d'exploitation (17) coopère avec une installation de commutation qui active un étage d'émission (31) de l'émetteur/récepteur central (16) seulement pendant l'émission des signaux de code.

5. Dispositif selon l'une quelconque des revendications précédentes,
**caractérisé en ce que**
les émetteurs/récepteurs des points de mesure (10, 12) et l'émetteur/récepteur central (16) ont une même fréquence radio qui peut notamment être modifiée.

6. Dispositif selon la revendication 5,
**caractérisé en ce qu'**
il comporte des éléments de réglage (26) tels que des commutateurs pour modifier la fréquence radio.

7. Dispositif selon la revendication 5,
**caractérisé en ce qu'**
il comporte des signaux de code émis par l'émetteur/récepteur central (16) pour modifier la fréquence radio des émetteurs/récepteurs de points de mesure (10-12).

8. Dispositif selon l'une quelconque des revendications précédentes,
**caractérisé par**
un émetteur de points de mesure (19) utilisant une autre fréquence radio pour transmettre des signaux de mesure de référence ainsi qu'un étage de réception supplémentaire (20) fonctionnant à une autre fréquence radio dans l'émetteur/récepteur central (16).

9. Dispositif selon la revendication 8,
**caractérisé en ce que**
l'installation de commande et d'exploitation (17) comporte un comparateur pour comparer les valeurs de mesure à des valeurs de mesure de référence.

10. Dispositif selon l'une quelconque des revendications précédentes,
**caractérisé par**
sa réalisation sous la forme d'un système de transmission de valeurs de mesure pour contrôler la pression des freins de véhicules, notamment de camions.

11. Dispositif selon la revendication 10,
**caractérisé en ce que**
les émetteurs/récepteurs des points de mesure (10-12) sont installés sur des composants du système de freins et sur l'émetteur/récepteur central (16) dans un poste de contrôle de freins.

12. Dispositif selon les revendications 10 et 11,
**caractérisé en ce qu'**
un signal de mesure de référence est la valeur de mesure de la pression de la tête d'accouplement de la pression de freins du véhicule.
